# EUROPEAN PATENT SPECIFICATION

(11) **EP 3 088 099 B1**
(45) Date of publication and mention of the grant of the patent: **21.03.2018**
(21) Application number: 15165456.3
(22) Date of filing: 28.04.2015
(51) Int. Cl.: B21D 39/02, B23K 26/00, B23K 33/00, F16B 5/00

(54) **METHOD OF MANUFACTURING A MULTI-COMPONENT COMPOUND LIGHTWEIGHT VEHICLE BODY PART AND AUTOMATED ASSEMBLY STATION FOR PERFORMING SAID METHOD**
VERFAHREN ZUR HERSTELLUNG EINES LEICHTGEWICHTIGEN MEHRKOMPONENTENMASSEN-KAROSSERIETEILS UND AUTOMATISIERTE MONTAGESTATION ZUR DURCHFÜHRUNG DIESES VERFAHRENS
PROCÉDÉ DE FABRICATION D'UNE PIÈCE LÉGÈRE DE CARROSSERIE DE VÉHICULE À COMPOSITE MULTI-COMPOSANTS ET STATION D'ASSEMBLAGE AUTOMATISÉE POUR EFFECTUER LEDIT PROCÉDÉ

(43) Date of publication of application: 02.11.2016
(73) Proprietor: Tower Automotive Holding GmbH, 51107 Köln-Rath (DE)
(72) Inventor: Brunow, Hilmar, 42929 Wermelskirchen (DE)
(74) Representative: Grättinger Möhring von Poschinger Patentanwälte Partnerschaft

(56) References cited:
- JP-A- H0 775 888
- JP-A- 2011 224 624
- US-A- 5 897 796
- US-A- 6 109 682
- US-A1- 2005 263 500
- US-A1- 2011 170 946

## Description

The present invention pertains to manufacturing of a multi-component compound lightweight vehicle body part. In greater detail, the invention relates to a method of manufacturing a multi-component compound lightweight vehicle body part by joining at least one light metal inner structural member to a light metal outer shell member having a preformed final geometry sheet portion, and inseparably connecting said members.

For the manufacture of multi-part compound automotive components, inseparably connecting of the individual prefabricated members is performed typically by closed hemming a hemming flange of one of the members about a flange portion of the other member. Also, welding is used for connecting a plurality of members to form a multi-part compound automotive component. Typical such compound automotive body parts are the so called hang on parts like hoods, doors, trunklids, hatches and roofs. In this group of vehicle or body parts, joining seams of lengths between 1m and 7m connecting the at least one inner structural member (e.g. inner panel) to the outer shell member are needed. The respective joining zones should not be visible from outside a car, when the car is closed. The joining zones are therefore, on purpose, located in hidden areas which become only visible when hoods, doors, trunklids, or hatches are opened.

Conventionally, there is a hemming-connection between the outer shell member and the at least one inner structural member made by bending or folding of a hemming flange (i.e. an overhang provided at the outer shell member at the periphery of the preformed final geometry sheet portion) to engage a flange portion (inner flange) of the at least one inner structural member, about which the (outer) hemming flange is folded to form a closed hem. Such hemming operation may be performed in different ways such as by using dedicated cam and anvil tools specifically adapted to the individual work-piece by being contoured corresponding to the product geometry (typically used in electrically or hydraulically driven hemming presses for multi-step bending of the hemming rim) or by using more or less universally applicable roller hemming heads (typically used in connection with programmable robots). In the latter instance, there may be a moving roller hemming head and a stationary work-piece or a moving work-piece moved along a stationary roller hemming head.

In order to achieve an improved structural integrity between the visible outer skin (i.e. the preformed final geometry sheet portion of the outer shell member) and the partially concealed inner structural member, it is known to additionally fill the edging folded seams with structural adhesive before the joining process. The structural adhesive not only increases the structural integrity between the outer skin member and the inner structural member, but also seals the hem against moisture penetration causing corrosion. US 2011/0170946 discloses a sheet-metal composite, a method for joining sheets, and a joining device. The members of the sheet-metal composite may be joined by a combination of hemming and welding. For example, there may be employed a combined tool comprising a tool head, a flanging tool which is arranged on the tool head and comprises at least one flanging member, and a welding or soldering tool which is arranged on the tool head. The flanging member and the welding or soldering tool may be arranged such that the flanging member forms a pressing means for the welding or soldering tool. The welding tool may be a laser welding tool, such as a gas-shielded welding tool. The process may be employed e.g. for the manufacture of automobile doors.

The traditional material for the manufacture of automotive body parts is steel. The above mentioned approach on manufacturing multi-component compound vehicle body parts is well established with outer shell members and inner structural members, to be joined with one another, made from steel. However, in the recent past other materials of less weight have become attractive for the purpose of vehicle weight reduction and, as a consequence, fuel efficiency, some of the light metals being also advantageous in terms of a reduced tendency of corrosion.

The present invention aims at providing for an efficient, reliable, and particularly economic method of manufacturing a high-quality multi-component compound lightweight vehicle body part by joining at least a light metal outer shell member having a preformed final geometry sheet portion and at least one light metal inner structural member. Moreover, the present invention aims at providing an automated assembly station for performing said method.

The object stated above is achieved by the method defined in claim 1. Thus, the method of manufacturing a multi-component compound lightweight vehicle body part of the present invention is coined by the following steps:
- providing a light metal outer shell member having a preformed final geometry sheet portion and, at least at a part of the periphery thereof, an overhang forming a hemming flange;
- providing at least one light metal inner structural member having, at least at a part of its periphery, at least one flange portion;
- placing the outer shell member into and clamping it to an assembly fixture of an automated assembly station, said automated assembly station comprising at least one hemming unit and at least one shielding gas laser beam welding unit;
- hemming the hemming flange of the outer shell member by said hemming unit;
- joining to the outer shell member the at least one inner structural member fed to the said automated assembly station, the flange portion of the at least one inner structural member contacting the hemming flange of the outer shell member;
- inseparably connecting the at least one inner structural member to the outer shell member by shielding gas laser beam welding of the flange portion of the at least one inner structural member to the hemming flange of the outer shell member by said laser beam welding unit at an energy rate of not more than 0.8 kJ/m and at speeds of greater than 2m/min, the hemming operation and the laser beam welding operation being performed in the one automated assembly station with the outer shell member remaining in the one assembly fixture through both, the hemming operation and the laser beam welding operation;
- removing the assembled multi-component lightweight vehicle body part from the automated assembly station.

In combination with the remaining features defining the method of the present invention, there is particularly characteristic for the latter that the light metal outer shell member is received in one and the same assembly fixture of the automated assembly station during the multi-step joining process including at least the step of bending the outer shell member overhang (hemming flange) by the hemming unit and the step of shielding gas laser beam welding of the inner structural member to the hemming flange of the outer shell member by the laser beam welding unit, said two operations being performed by only one automated assembly station and the shielding gas laser beam welding being performed at an energy rate of not more than 0.8 kJ/m and at speeds of greater than 2m/min. This combination, together with the remaining process characteristics, results in several beneficial synergetic effects, specifically if at least one of the inner structural member and the outer shell member consists from an aluminium alloy, as it is characteristic for a further preferred embodiment.

The absence of any handling of the outer shell member (or the compound work-piece comprising same, respectively) in the meaning of that it remains, throughout the hemming and laser beam welding operations, in the one and same assembly fixture, in which the light metal outer shell member is received, results in benefits in two regards, process efficiency as well as product quality. For the latter there is important that, due to the absence of any dislocation of the partly assembled work-piece between the joining steps of hemming and laser beam welding from one assembly fixture into another one, there is no chain of tolerances; this allows for a particularly high precision of the final work-piece and there is moreover no time lost for transferring of the work-piece from one assembly fixture to another one. This benefit, however, can be economically used in practice (in terms of mass production) only because of a more harmonized working speed of the hemming operation and the laser beam welding operation. This again is possible, in application of the present invention, because of the use of shielding gas laser beam welding technology, which allows light metal welding rates of greater than 2 m/min, such as for example about 4 m/min and more, or even up to or greater than 6 m/min. In case of significantly different working speeds of the hemming operation on the one hand and the laser beam welding operation on the other hand, as it applies to traditionally employed state-of-the-art methods, aspects of machine efficiency (in terms of machine capacity utilization) requires to have the two operations performed in separate machines (e.g. two or three laser beam welding machines fed with partly assembled intermediate products by a single hemming machine).

The high working speed of the laser beam welding unit has, moreover, a significant positive effect on the quality of the work-piece. This is since the overall energy input into the work-piece is less than in case of a traditional rather slow working speed, even if the laser beam itself has a higher energy density. This increased energy density is overcompensated by the increased working speed. The named reduced overall energy input results in both, a narrower, more focussed laser weld seam and a reduction of the heat distortion of the work-piece. Both aspects contribute to the excellent quality of the multi-component compound lightweight vehicle body part manufactured in application of the method of the present invention. Moreover, the reduced overall energy input into the work-piece by the laser beam welding unit is as such a factor of cost saving. The comparably high welding speed is economically advantageous also because of the reduced consumption of rather expensive shielding gas. A further economic effect which must not be underestimated is the significantly reduced floor space required for the machinery and equipment needed for performing the method of the present invention as compared with a process where the hemming operation and the laser beam welding operation are performed by different machines.

After all, the unique method of the present invention features a number of unforeseeable advantages which are of extreme importance in terms of economically and efficiently manufacturing highest quality multi-component compound lightweight vehicle body parts.

While there is received, as set out in detail above, the outer shell member in the one and same assembly fixture during the hemming and laser beam welding operations, the automated assembly station performing said operations may preferably comprise separate downhold devices co-operating with the assembly fixture during the hemming operation on the one hand and the laser beam welding operation on the other hand. Any switchover from employing one downhold device to another one for clamping the work-piece may be made without any lost time while the work-piece remains in the assembly fixture. Preferably, there is some time overlap of the clamping by the various downhold devices to prevent inadvertent dislocation of the work-piece.

According to a first preferred embodiment, the automated assembly station has a unitary security zone, the hemming and the laser beam welding being performed within said unitary security zone. This limits the costs for the security equipment confining the security zone to a minimum, as compared with two separate security zones, one for a hemming machine and another for a laser beam welding machine.

Depending of the size and shape of the individual work-piece and the position and extension of the joint seam(s) it may be advisable to dislocate the assembly fixture (with the light metal outer shell member received therein) between the hemming and the laser beam welding. This, however, is not necessarily the case. Rather, the hemming and the laser beam welding may be performed also without any dislocation of the assembly fixture there between.

Within the present invention, it is possible that the hemming operation results in a closed hem in the meaning that the (outer) hemming flange is bent about the inner flange portion such that the hemming contributes to inseparably connecting the outer shell member and the inner structural member. As such, the combination of hemming and laser beam welding for inseparably connecting the at least one light metal inner structural member to the light metal outer shell member provides for a particularly strong and reliable joint. There might, as compared with hemming without laser beam welding or laser beam welding without hemming, possibly be even reduced the thickness of the light metal sheet material as a consequence of the improved integrity of the joint.

However, according to a preferred embodiment of the present invention, the hemming operation results in an open hem in the meaning that the (outer) hemming flange and the final geometry sheet portion do not sandwich between each other the flange portion of the inner structural member. This avoids heat conduction from the laser beam weld into the final geometry sheet portion, resulting in a reduced risk of heat induced surface distortions at the final geometry sheet portion, which distortions might be visible from the outside.

According to another preferred embodiment, adhesive is applied to at least one of the outer shell member and the at least one inner structural member before joining same by an adhesive application unit forming part of the automated assembly station. In this context it is to be noted that there are less limitations as to the nature and type of the adhesive because of the relatively low overall energy input into the work-piece during the shielding gas laser beam welding operation (see above).

Just for the sake of avoiding misinterpretations, it is to be noted that the term "hemming" is to be understood in a broad meaning. It covers not only hemming in the narrower sense (i.e. joining two members along a curved line such that there is some compression and/or stretching of the deformed material such as the bent hemming rim) but also hemming with folding of hemming rims along straight edges. Depending of the individual circumstances, the hemming may be performed by using a hemming unit comprising a roller hemming head (stationary or moving) or by using a hemming unit comprising a dedicated cam and anvil device.

The specific advantages of the present invention discussed above are particularly distinct if, according to a further preferred embodiment, a further treatment to at least one of the outer shell member and the at least one inner structural member is performed simultaneously but distant to one of the said hemming operation and laser beam welding operation. E.g., there may be performed a further hemming operation, a further welding operation, the application of adhesive to at least one of the members, or the assembly of an additional member fed to the said automated assembly station simultaneously but distant to one of the said hemming operation and laser beam welding operation discussed above. Such simultaneous operations result in a particularly high process efficiency in terms of production rate. Moreover, there again result advantages in terms of product quality from the performing of said additional treatment while the outer shell member is received within the one and single assembly fixture of the automated assembly station. It is noticed that, as sufficiently comprehensively discussed above, the present invention provides for several synergetic advantages of great practical importance when there are to be joined two light metal members to form a multi-component compound lightweight vehicle body part, at least a part of which advantages also apply in case at least one of the two structural members to be joined consists from other material than light metal, such as it applies e.g. when there are to be joined two structural members from steel.

In the following, the present invention is elucidated exemplarily making reference to the drawing illustrating a preferred embodiment. Evidently, there is no limitation to this specific embodiment, the present invention rather being defined by the appended claims.
- Fig. 1: shows exemplarily two members to be joined and connected to form a multi-component compound vehicle body part, namely an outer shell member and an inner structural member,
- Fig. 2: shows the multi-component compound vehicle body part assembled form the members of Fig. 1,
- Fig. 3: shows, in connection with a multi-component compound lightweight vehicle body part to be assembled, an automated assembly station according to the present invention, and
- Fig. 4: shows schematically a partial section through a preferred multi-component compound lightweight vehicle body part manufactured in accordance with the present invention.

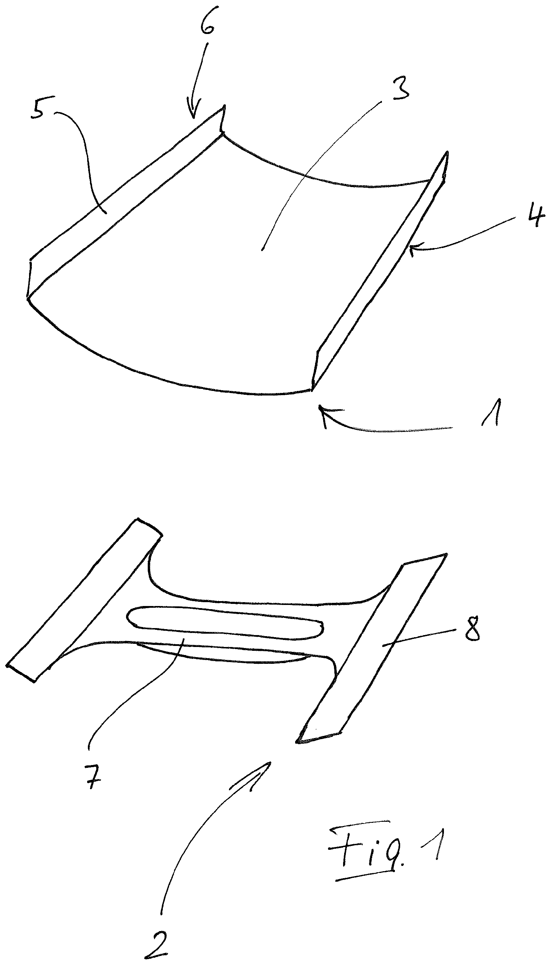

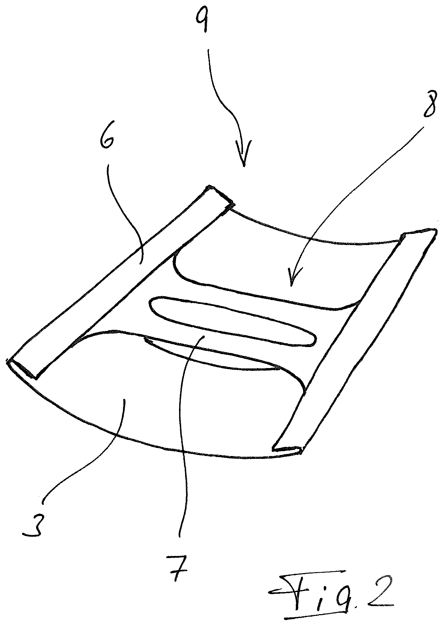

As schematically shown in Figs. 1 and 2 illustrating the state of the art, there are to be assembled into a multi-component compound vehicle body part two members, namely an outer shell member 1 on the one hand and an inner structural member 2 on the other hand, both members being drawn from a steel sheet. The outer shell member 1 has a preformed final geometry sheet portion 3 and, at two opposed peripheral edges 4 thereof, upstanding overhangs 5. These overhangs 5 forming two hemming flanges 6 have already been angled with regard to the preformed final geometry sheet portion 3 in the drawing press. The inner structural member 2 intended to stiffen and reinforce the outer shell member 1 when connected to the latter has a central stiffening and reinforcing portion 7 and two opposed peripheral flange portions 8. As it is known in the art, the dimension and the shape of the inner structural member 2 are adapted to the dimension and the shape of the outer shell member 1 such that the inner structural member 2 is capable of stiffening and reinforcing the outer shell member 1 when connected to the latter.

The process of assembling the two members 1 and 2 into a compound vehicle part 9 comprises the steps of joining the inner structural member 2 and the outer shell member 1 to have the flange portions 8 of the inner structural member 2 contact the outer shell member 1 adjacent its periphery and inseparably connecting both members by folding, by a hemming unit, of the two outer shell member overhangs 5 (hemming flanges 6) to the two inner structural member flange portions 8, the said hemming unit forming part of an automated assembly station.

To this extent, the technology is well known in the art such that there is no need for additional explanations.

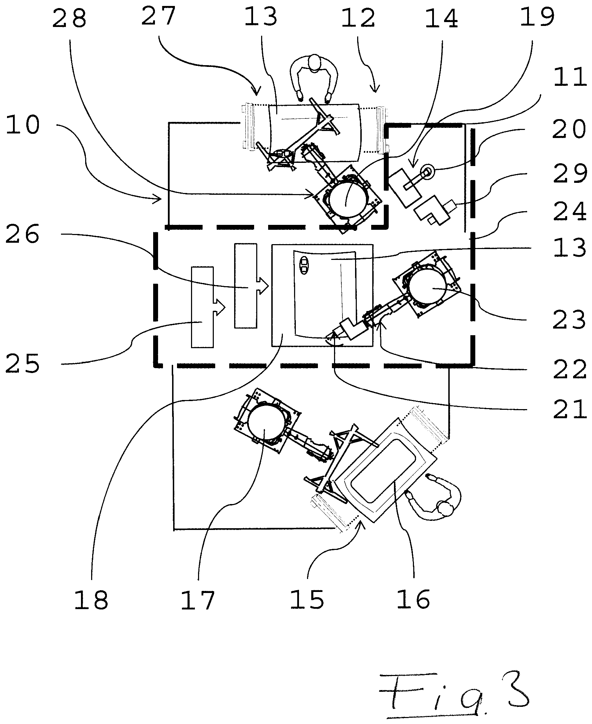

A preferred embodiment of an automated assembly station 10 adapted to performing the present invention of manufacturing a multi-component compound lightweight vehicle body part from at least two light metal members is illustrated in Fig. 3. The frame line 11 indicates the outer boundaries of the automated assembly station 10 and the floor space covered thereby. The automated assembly station 10 comprises, as essential components, a first feeding port 12 for the light metal outer shell member 13 with a first feeding robot 14, a second feeding port 15 for the light metal inner structural member 16 with a second feeding robot 17, an assembly fixture 18 for receiving the light metal outer shell member 13, a hemming unit 19 with a roller hemming head 20 and a laser beam welding unit 21. Both, the hemming unit 19 and the laser beam welding unit 21 are for being selectively attached to the head 22 of a third robot 23 for performing, step-by-step, a hemming operation and a welding operation. In Fig. 3 the hemming unit 19 is shown in its stored position while the laser beam welding unit 21 is attached to the head 22 of the third robot 23.

Both said operations for shaping the outer shell member in the region of the hemming flange and inseparably connecting the inner structural member 16 to the outer shell member 13 are performed within a unitary booth-type security zone 24 of the automated assembly station 10, the outer shell member 13 staying immovably received, after being placed therein by the first feeding robot 14, in the assembly fixture 18 throughout both, the hemming operation and the welding operation. Particularly, there is no handling of the outer shell member between the said two operations changing its position with regard to the one and single assembly fixture 18. To have the outer shell member 13 stay immovably received within the said assembly fixture 18, there is provided for first downhold devices 25 (out of engagement in Fig. 3) co-operating with the assembly fixture 18 for clamping the outer shell member 13 during the hemming operation, and for second downhold devices 26 (in engagement) co-operating with the assembly fixture 18 for clamping the work-piece during the laser beam welding operation. The assembly fixture 18 with the outer shell member 13 received therein may be moved (dislocated such as, e.g. turned about a vertical axis) or not, depending on the specific needs.

The laser beam welding unit 21 is a shielding gas laser beam welding unit. The drive unit of the third robot 23 is programmed to move the laser beam welding unit 21 attached to its head 22 relative to the work-piece with a welding speed of at least 2m/min.

After termination of the hemming and welding operations, the assembled multi-component lightweight vehicle body part is withdrawn from the automated assembly station 10. The outlet port 27 through which the assembled multi-component lightweight vehicle body part is removed from the automated assembly station 10 coincides with the first feeding port 12, the first feeding robot 14 acting as delivery robot 28 for the ready assembled multi-component lightweight vehicle body part.

Depending on the specific part to be assembled in the automated assembly station 10, an adhesive application unit 29 (shown in its stored position) may also be attached to the head 22 of the third robot 23 for applying adhesive to at least one of the light metal outer shell member 13 and the inner structural member 16 before joining these members.

The automated assembly station illustrated in Fig. 3 is not limited to joining and inseparably connecting the light metal inner structural member 16 to the light metal outer shell member 13. Rather, there may be performed additional operations. E.g., there may be pre-assembled, in the region of the second feeding port 15, the light metal inner structural member 16 by bolting and/or riveting two or more individual pieces. On the other hand, there may be performed, in the region of the outlet port 27 (coinciding with the first feeding port 12) a finishing of the assembled multi-component lightweight vehicle body part such as the application of a dampener. Moreover, there may be performed by respective equipment simultaneously but distant to one of the said hemming operation and laser beam welding operation, a further treatment to at least one of the outer shell member and the at least one inner structural member, such as a further hemming operation, a further welding operation, the application of adhesive to at least one of the members, or the assembly of an additional member fed to the said automated assembly station. For such simultaneous additional treatment, additional equipment (not shown) similar to the third robot 23 might be provided.

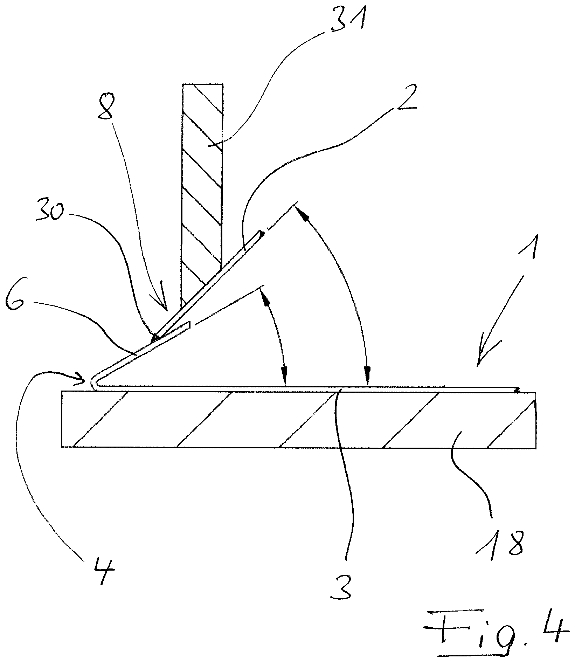

The multi-component compound lightweight vehicle body part illustrated in Fig. 4 comprises a light metal outer shell member 1 and a light metal inner structural member 2. The outer shell member 1 has a preformed final geometry sheet portion 3 and, at the periphery thereof, a hemming flange 6. The hemming flange 6 is shown in its final position, i.e. after the respective marginal overhang 5 of the outer shell member has been bent, by a hemming operation, from its originally drawn 90° arrangement with respect to the final geometry sheet portion 3 to an arrangement of e.g. about 30° (so called "open hem").

The inner structural member 2 has, at its periphery, a flange portion 8. The said flange portion 8 is welded, by a shielding gas laser beam welding operation, to the hemming flange 6 of outer shell member 1. The laser beam weld is identified by reference numeral 30. And reference numeral 31 identifies a holder for the inner structural member 2 when the flange portion 8 thereof is welded to the hemming flange 6. Just for the sake of clarity it is noted that holder 31 for the inner structural member 2 is in use only during the laser beam welding operation. The outer shell member 1 is fixed to the assembly fixture 18 throughout the hemming operation and the laser beam welding operation by different clamp means.

In the shown embodiment, the angle between the flange portion 8 of the inner structural member 2 and the final geometry sheet portion 3 of the outer shell member 1 is greater than the angle between the hemming flange 6 and the final geometry sheet portion 3 of the outer shell member 3, namely about 45°. The inner structural member 2 contacts the hemming flange 6 of the outer shell member 1 along the marginal edge of its flange portion 8.

## Claims

1. Method of manufacturing a multi-component compound lightweight vehicle body part, comprising the following steps:
providing a light metal outer shell member (1; 13) having a preformed final geometry sheet portion (3) and, at least at a part of the periphery thereof, an overhang (5) forming a hemming flange (6);
providing at least one light metal inner structural member (2; 16) having, at least at a part of its periphery, at least one flange portion (8); placing the outer shell member (1; 13) into and
clamping it to an assembly fixture (18) of an automated assembly station (10), said automated assembly station comprising at least one hemming unit (19) and at least one shielding gas laser beam welding unit (21);
hemming the hemming flange (6) of the outer shell member by said hemming unit (19);
joining to the outer shell member (1; 13) the at least one inner structural member (2; 16) fed to the said automated assembly station (10), the flange portion (8) of the at least one inner structural member (2; 16) contacting the hemming flange (6) of the outer shell member (1; 13);
inseparably connecting the at least one inner structural member (2; 16) to the outer shell member (1; 13) by shielding gas laser beam welding of the flange portion (8) of the at least one inner structural member (2; 16) to the hemming flange (6) of the outer shell member (1; 13) by said laser beam welding unit (21) at an energy rate of not more than 0.8 kJ/m and at speeds of greater than 2m/min, the hemming operation and the laser beam welding operation being performed in the one automated assembly station (10) with the outer shell member (1; 13) remaining in the one assembly fixture (18) through both, the hemming operation and the laser beam welding operation;
removing the assembled multi-component lightweight vehicle body part (9) from the automated assembly station.

2. Method of claim 1, wherein the automated assembly station (10) has a unitary security zone (24), the hemming operation and the laser beam welding operation being performed within said unitary security zone.

3. Method of claim 1 or claim 2, wherein the assembly fixture (18) is dislocated between the hemming operation and the laser beam welding operation.

4. Method of claim 1 or claim 2, wherein the assembly fixture (18) is not dislocated between the hemming operation and the laser beam welding operation.

5. Method of one of claims 1-4, wherein, by an adhesive application unit forming part of the automated assembly station (10), adhesive is applied to at least one of the outer shell member (1; 13) and the at least one inner structural member (2; 16) before joining same.

6. Method of one of claims 1-5, wherein the hemming operation is performed by a roller hemming head (22).

7. Method of one of claims 1-5, wherein the hemming operation is performed by a dedicated cam and anvil device.

8. Method of one of claims 1-7, wherein the shielding gas laser beam welding is performed at speeds of greater than 4m/min.

9. Method of one of claims 1-8, wherein at least one of the outer shell member (1; 13) and the at least one inner structural member (2; 16) consist from an aluminium alloy.

10. Method of one of claims 1-8, wherein there is performed, simultaneously but distant to one of the said hemming operation and laser beam welding operation, a further treatment to at least one of the outer shell member (1; 13) and the at least one inner structural member (2; 16).

11. Method of claim 10, wherein the further treatment comprises a further hemming operation, a further welding operation, the application of adhesive to at least one of the members, or the assembly of an additional member fed to the said automated assembly station.

12. Automated assembly station (10) for performing the method of claim 2, comprising a first feeding port (12) for the outer shell member (1; 13), at least one second feeding port (15) for the at least one inner structural member (2; 16), at least one hemming unit (19) and at least one shielding gas laser beam welding unit (21) arranged within a unitary security zone (24), at least one assembly fixture (18) for receiving the outer shell member (1; 13) during its being treated by both, the at least one hemming unit (19) and the shielding gas laser beam welding unit (21), and an outlet port (27) for the assembled multi-component lightweight vehicle body part, wherein shielding gas laser beam welding unit (21) is provided to perform the shielding gas laser beam welding at an energy rate of not more than 0.8 kJ/m and wherein a drive unit is attributed to the shielding gas laser beam welding unit (21) allowing for a relative movement of the laser welding unit with regard to the workpiece of at least 2m/min.

13. Assembly station of claim 12, comprising separate downhold devices (25, 26) for co-operating with the assembly fixture (18) during the hemming operation on the one hand and the laser beam welding operation on the other hand.

14. Assembly station of claim 12 or claim 13, comprising an adhesive application unit for applying adhesive to at least one of the outer shell member and the at least one inner structural member.

15. Assembly station of one of claims 12-14, wherein the hemming unit comprises a roller hemming head (22).

16. Assembly station of one of claims 12-14, wherein the hemming unit comprises a dedicated cam and anvil device.

## Patentansprüche

1. Verfahren zur Herstellung eines leichten Mehrkomponentenverbund-Fahrzeugkarosserieteils, umfassend die folgenden Schritte:
Bereitstellen eines Leichtmetall-Außenhüllenelements (1; 13), das einen Blechabschnitt mit vorgeformter Endgeometrie (3) und wenigstens an einem Teil seines Umfangs einen Überhang (5) aufweist, der einen Bördelflansch (6) bildet;
Bereitstellen von wenigstens einem Leichtmetall-Innenstrukturelement (2; 16), das wenigstens an einem Teil seines Umfangs wenigstens einen Flanschabschnitt (8) aufweist;
Platzieren des Außenhüllenelements (1; 13) in und Festklemmen desselben an einer Montagevorrichtung (18) einer automatisierten Montagestation (10), wobei die automatisierte Montagestation wenigstens eine Bördeleinheit (19) und wenigstens eine Schutzgas-Laserstrahl-Schweißeinheit (21) umfasst;
Bördeln des Bördelflansches(6) des Außenhüllenelements durch die Bördeleinheit (19);
Anfügen des in die automatisierte Montagestation (10) eingeführten wenigstens einen Innenstrukturelements (2; 16) an das Außenhüllenelement (1; 13), wobei der Flanschabschnitt (8) des wenigstens einen Innenstrukturelements (2; 16) den Bördelflansch (6) des Außenhüllenelements (1; 13) berührt;
untrennbares Verbinden des wenigstens einen Innenstrukturelements (2; 16) mit dem Außenhüllenelement (1; 13) durch Schutzgas-Laserstrahlschweißen des Flanschabschnitts (8) des wenigstens einen Innenstrukturelement (2; 16) an den Bördelflansch (6) des Außenhüllenelements (1; 13) durch die Laserstrahl-Schweißeinheit (21) mit einer Energierate von nicht mehr als 0,8 kJ/m und mit Geschwindigkeiten von mehr als 2 m/min, wobei der Bördelvorgang und der Laserstrahlschweißvorgang in der einen automatisierten Montagestation (10) durchgeführt wird, wobei das Außenhüllenelement (1; 13) während beiden, dem Bördelvorgang und dem Laserstrahlschweißvorgang, in der einen Montagevorrichtung (18) bleibt;
Entfernen des montierten leichten Mehrkomponenten-Fahrzeugkarosserieteils (9) von der automatisierten Montagestation.

2. Verfahren nach Anspruch 1, wobei die automatisierte Montagestation (10) eine einheitliche Sicherheitszone (24) aufweist, wobei der Bördelvorgang und der Laserstrahlschweißvorgang innerhalb der einheitlichen Sicherheitszone durchgeführt werden.

3. Verfahren nach Anspruch 1 oder 2, wobei die Montagevorrichtung (18) zwischen dem Bördelvorgang und dem Laserstrahlschweißvorgang verschoben wird.

4. Verfahren nach Anspruch 1 oder 2, wobei die Montagevorrichtung (18) zwischen dem Bördelvorgang und dem Laserstrahlschweißvorgang nicht verschoben wird.

5. Verfahren nach einem der Ansprüche 1 - 4, wobei durch einen Klebstoffauftrag-Einheitsbildungsteil der automatisierten Montagestation (10) Klebstoff auf wenigstens eines von dem Außenhüllenelement (1; 13) und dem wenigstens einen Innenstrukturelement (2; 16) aufgetragen wird, bevor diese aneinandergefügt werden.

6. Verfahren nach einem der Ansprüche 1 - 5, wobei der Bördelvorgang durch einen Rollenbördelkopf (22) durchgeführt wird.

7. Verfahren nach einem der Ansprüche 1 - 5, wobei der Bördelvorgang durch eine eigene Nocken- und Ambossvorrichtung durchgeführt wird.

8. Verfahren nach einem der Ansprüche 1 - 7, wobei das Schutzgas-Laserstrahlschweißen mit Geschwindigkeit von mehr als 4 m/min durchgeführt wird.

9. Verfahren nach einem der Ansprüche 1 - 8, wobei wenigstens eines von dem Außenhüllenelement (1; 13) und dem wenigstens einen Innenstrukturelement (2; 16) aus einer Aluminiumlegierung besteht.

10. Verfahren nach einem der Ansprüche 1 - 8, wobei gleichzeitig, jedoch entfernt von einem von dem Bördelvorgang und dem Laserstrahlschweißvorgang eine weitere Bearbeitung an wenigstens einem von dem Außenhüllenelement (1; 13) und dem wenigstens einen Innenstrukturelement (2; 16) durchgeführt wird.

11. Verfahren nach Anspruch 10, wobei die weitere Bearbeitung einen weiteren Bördelvorgang, einen weiteren Schweißvorgang, das Auftragen von Klebstoff auf wenigstens eines der Elemente oder die Montage eines zusätzlichen Elements umfasst, das in die automatisierte Montagestation eingeführt wird.

12. Automatisierte Montagestation (10) zur Durchführung des Verfahrens nach Anspruch 2, umfassend eine erste Zufuhröffnung (12) für das Außenhüllenelement (1; 13), wenigstens eine zweite Zufuhröffnung (15) für das wenigstens eine Innenstrukturelement (2; 16), wenigstens eine Bördeleinheit (19) und wenigstens eine Schutzgas-Laserstrahl-Schweißeinheit (21), die innerhalb einer einheitlichen Sicherheitszone (24) angeordnet ist, wenigstens eine Montagevorrichtung (18) zum Aufnehmen des Außenhüllenelements (1; 13), während es durch beide, die wenigstens eine Bördeleinheit (19) und die Schutzgas-Laserstrahl-Schweißeinheit (21), bearbeitet wird, und eine Auslassöffnung (27) für das montierte leichte Mehrkomponenten-Fahrzeugkarosserieteil, wobei eine Schutzgas-Laserstrahl-Schweißeinheit (21) vorgesehen ist, um das Schutzgas-Laserstrahlschweißen mit einer Energierate von nicht mehr als 0,8 kJ/m durchzuführen und wobei eine Antriebseinheit der Schutzgas-Laserstrahl-Schweißeinheit (21) zugeordnet ist, die eine relative Bewegung der Laserschweißeinheit in Bezug auf das Werkstück von wenigstens 2 m/min ermöglicht.

13. Montagestation nach Anspruch 12, umfassend separate Niederhaltevorrichtungen (25, 26) zum Zusammenwirken mit der Montagevorrichtung (18) während des Bördelvorgangs einerseits und des Laserstrahlschweißvorgangs andererseits.

14. Montagestation nach Anspruch 12 oder 13, umfassend eine Klebstoffauftragseinheit zum Auftragen von Klebstoff auf wenigstens eines von dem Außenhüllenelement und dem wenigstens einen Innenstrukturelement.

15. Montagestation nach einem der Ansprüche 12 - 14, wobei die Bördeleinheit einen Rollenbördelkopf (22) umfasst.

16. Montagestation nach einem der Ansprüche 12 - 14, wobei die Bördeleinheit eine eigene Nocken- und Ambossvorrichtung umfasst.

## Revendications

1. Procédé de fabrication d'une pièce de carrosserie de véhicule ultralégère composite à composants multiples, comprenant les étapes consistant à :
fournir un élément de coque extérieure en métal léger (1 ; 13) ayant une portion de feuille à géométrie finale préformée (3) et, au moins au niveau d'une partie de la périphérie de cette dernière, un surplomb (5) formant une bride de sertissage (6) ;
fournir au moins un élément structurel intérieur en métal léger (2 ; 16) ayant, au moins au niveau d'une partie de sa périphérie, au moins une portion de bride (8) ;
placer l'élément de coque extérieure (1 ; 13) dans et le serrer sur une fixation d'assemblage (18) d'un poste d'assemblage automatisé (10), ledit poste d'assemblage automatisé comprenant au moins une unité de sertissage (19) et au moins une unité de soudure à faisceau laser à gaz de protection (21) ;
sertir la bride de sertissage (6) de l'élément de coque extérieure par ladite unité de sertissage (19) ;
joindre à l'élément de coque extérieure (1 ; 13) au moins un élément structurel intérieur (2 ; 16) alimenté dans ledit poste d'assemblage automatisé (10), la portion de bride (8) d'au moins un élément structurel intérieur (2 ; 16) contactant la bride de sertissage (6) de l'élément de coque extérieure (1 ; 13) ;
en raccordant de manière inséparable au moins un élément structurel intérieur (2 ; 16) à l'élément de coque extérieure (1 ; 13) par soudure à faisceau laser à gaz de protection de la portion de bride (8) d'au moins un élément structurel intérieur (2 ; 16) à la bride de sertissage (6) de l'élément de coque extérieure (1 ; 13) par ladite unité de soudure à faisceau laser (21) à un rendement énergétique de pas plus de 0,8 kJ/m et à des vitesses supérieures à 2m/min, l'opération de sertissage et l'opération de soudure à faisceau laser étant effectuées dans le poste d'assemblage automatisé (10) avec l'élément de coque extérieure (1 ; 13) restant dans une fixation d'assemblage (18) pendant à la fois à l'opération de sertissage et l'opération de soudure à faisceau laser ;
retirer la partie de carrosserie de véhicule ultralégère à composants multiples assemblée (9) du poste d'assemblage automatisé.

2. Procédé selon la revendication 1, dans lequel le poste d'assemblage automatisé (10) a une zone de sécurité unitaire (24), l'opération de sertissage et l'opération de soudure à faisceau laser étant effectuées à l'intérieur de ladite zone de sécurité unitaire.

3. Procédé selon la revendication 1 ou 2, dans lequel la fixation d'assemblage (18) est disloquée entre l'opération de sertissage et l'opération de soudure à faisceau laser.

4. Procédé selon la revendication 1 ou 2, dans lequel la fixation d'assemblage (18) n'est pas disloquée entre l'opération de sertissage et l'opération de soudure à faisceau laser.

5. Procédé selon une des revendications 1 - 4, dans lequel, par une unité d'application de colle faisant partie du poste d'assemblage automatisé (10), de la colle est appliquée sur au moins un de l'élément de coque extérieure (1 ; 13) et au moins un élément structurel intérieur (2 ; 16) avant de joindre ces derniers.

6. Procédé selon une des revendications 1 - 5, dans lequel l'opération de sertissage est effectuée par une tête de sertissage à molette (22).

7. Procédé selon une des revendications 1 - 5, dans lequel l'opération de sertissage est effectuée par un dispositif de came et enclume dédié.

8. Procédé selon une des revendications 1 - 7, dans lequel la soudure à faisceau laser à gaz de protection est effectuée à des vitesses supérieures à 4m/min.

9. Procédé selon une des revendications 1 - 8, dans lequel au moins un de l'élément de coque extérieure (1 ; 13) et au moins un élément structurel intérieur (2 ; 16) est constitué d'un alliage d'aluminium.

10. Procédé selon une des revendications 1 - 8, dans lequel il est effectué, simultanément mais à distance d'une desdites opérations de sertissage et opération de soudure à faisceau laser, un traitement ultérieur sur au moins un de l'élément de coque extérieure (1 ; 13) et au moins un élément structurel intérieur (2 ; 16).

11. Procédé selon la revendication 10, dans lequel le traitement ultérieur comprend une opération de sertissage ultérieur, une opération de soudure ultérieure, l'application de colle sur au moins un des éléments ou l'assemblage d'un élément additionnel alimenté dans ledit poste d'assemblage automatisé.

12. Poste d'assemblage automatisé (10) pour mettre en oeuvre le procédé selon la revendication 2, comprenant un premier port d'alimentation (12) pour l'élément de coque extérieure (1 ; 13), au moins un second port d'alimentation (15) pour au moins un élément structurel intérieur (2 ; 16), au moins une unité de sertissage (19) et au moins une unité de soudure à faisceau laser à gaz de protection (21) disposée à l'intérieur d'une zone de sécurité unitaire (24), au moins une fixation d'assemblage (18) pour recevoir l'élément de coque extérieure (1 ; 13) pendant qu'il est traité par ces deux derniers, au moins une unité de sertissage (19) et l'unité de soudure à faisceau laser à gaz de protection (21), et un port de sortie (27) pour la pièce de carrosserie de véhicule ultralégère à composants multiples assemblée, dans lequel une unité de soudure à faisceau laser à gaz de protection (21) est prévue afin d'effectuer la soudure à faisceau laser à gaz de protection à un rendement énergétique de pas plus de 0,8 kJ/m et dans lequel une unité d'entraînement est attribuée à l'unité de soudure à faisceau laser à gaz de protection (21) permettant un mouvement relatif de l'unité de soudure laser par rapport à la pièce à usiner d'au moins 2M/min.

13. Poste d'assemblage selon la revendication 12, comprenant des dispositifs de serre-flan (25, 26) pour coopérer avec la fixation d'assemblage (18) pendant l'opération de sertissage d'une part et l'opération de soudure à faisceau laser d'autre part.

14. Poste d'assemblage selon la revendication 12 ou 13, comprenant une unité d'application de colle pour appliquer de la colle sur au moins un de l'élément de coque extérieure et au moins un élément structurel intérieur.

15. Poste d'assemblage selon une des revendications 12 - 14, dans lequel l'unité de sertissage comprend une tête de sertissage à molette (22).

16. Poste l'assemblage selon une des revendications 12 - 14, dans lequel l'unité de sertissage comprend un dispositif de came et enclume dédié.
